# EUROPÄISCHE PATENTSCHRIFT

(11) **EP 3 754 290 B1**
(45) Veröffentlichungstag und Bekanntmachung des Hinweises auf die Patenterteilung: **11.05.2022**
(21) Anmeldenummer: 20178510.2
(22) Anmeldetag: 05.06.2020
(51) Int. Cl.: F41H 5/04, F41H 7/04, B64C 1/00, C21D 7/06, C23C 4/02

(54) **VERFAHREN ZUR HERSTELLUNG EINES PANZERUNGSBAUTEILS FÜR KRAFTFAHRZEUGE**
METHOD FOR MANUFACTURING AN ARMORED COMPONENT FOR MOTOR VEHICLES
PROCÉDÉ DE FABRICATION D'UN COMPOSANT DE BLINDAGE POUR VÉHICULES AUTOMOBILES

(30) Priorität: 17.06.2019 DE 102019116363
(43) Veröffentlichungstag der Anmeldung: 23.12.2020
(73) Patentinhaber: Benteler Automobiltechnik GmbH, 33102 Paderborn (DE)
(72) Erfinder: Borchert, Ulrich, 85402 Kranzberg (DE); Holzweißig, Martin, 33106 Paderborn (DE); Rüsing, Christian, 33106 Paderborn (DE); Klasfauseweh, Udo, 33334 Gütersloh (DE)
(74) Vertreter: Ksoll, Peter

(56) Entgegenhaltungen:
- DE-A1- 3 816 348
- DE-A1-102015 116 879
- DE-C1- 3 415 684

## Beschreibung

Die Erfindung betrifft ein Verfahren zur Herstellung eines Panzerungsbauteils für Kraftfahrzeuge. Sondergeschütze bzw. gepanzerte Fahrzeuge sollen Personen sowie Sachwerte vor Geschossen aus Kurz- und Langwaffen (ballistischer Schutz) schützen. Bei solchen Fahrzeugen soll das Eindringen von Geschossen aus allen Richtungen verhindert werden. Aus diesem Grund werden in den Fahrzeugen Panzerungsbauteile verbaut. Hierzu zählen Seitenteile einschließlich Schweller mit A-, B-, C-, D-Säulen und Türen, Front- und Heckbauteile, Dachbereich und Bodengruppe.

Die Beschussfestigkeit wird durch die Verwendung von Panzerstählen mit hoher Zähigkeit und Härte sowie deren geometrischer Auslegung, insbesondere eine entsprechende Dicke der Bauteile, erreicht. Die Panzerungsbauteile haben daher eine relativ große Dicke mit einem entsprechend hohen Gewicht. Es ist daher anzustreben, das Gewicht der Bauteile zu reduzieren, wobei aber gleichzeitig die geforderte Beschussfestigkeit sichergestellt werden muss.

Aus der DE 10 2015 116 879 A1 ist ein Fahrzeug-Panzerungsbauteil bekannt, welches ein Stahlblech umfasst, das mit einer Beschichtung versehen ist, wobei die Beschichtung aus einem gegenüber dem Stahlblech weicheren Material besteht. Dadurch ist es möglich, die Dicke des Stahlblechs und damit das Gewicht des Bauteils zu reduzieren. Bei diesem Bauteil ist es notwendig, dass die Beschichtung dauerhaft fest mit dem Stahlblech verbunden ist und insbesondere bei Multihit-Beschuss nicht abplatzt oder sich anderweitig löst.

Die DE 38 16 348 A1 offenbart ein Verfahren zur Herstellung von Metall-Verbundgusswerkstücken. Dabei wird zunächst die zu beschichtende Seite eines Metallkörpers aufgeraut und anschließend mit einer Koppelschicht aus Hartlot oder einer niedrigschmelzenden Metalllegierung versehen. Danach wird der Guss vorgenommen. Hierzu wird das Werkstück auf Fließtemperatur der Auflage erwärmt und das zweite Metall des Verbundes in flüssiger Form aufgebracht.

Der Erfindung lieg davon ausgehend die Aufgabe zugrunde, ein Verfahren bereitzustellen, mit welchem prozesssicher ein dauerhaft haltbares und multihitresistentes Panzerungsbauteil für Kraftfahrzeuge hergestellt werden kann.

Diese Aufgabe wird gelöst durch ein Verfahren mit den Merkmalen von Patentanspruch 1, besondere Ausgestaltungen des Verfahrens sind Gegenstand der abhängigen Ansprüche.

Die Erfindung betrifft ein Verfahren zur Herstellung eines Panzerungsbauteils für Kraftfahrzeuge mit folgenden Schritten:
- Bereitstellen eines Panzerungselements aus einem Panzerstahl,
- Strahltechnische Behandlung zumindest eines Bereiches einer Oberfläche des Panzerungselements,
- Aufbringen einer Beschichtung auf die strahltechnisch behandelte Oberfläche des Panzerungselements, wobei die Beschichtung aus einem gegenüber dem Panzerstahl weicheren Werkstoff besteht,
wobei
• das Panzerungselement aus einem Stahlblech mit einer Härte von 380 bis 760 Vickers (HV) bereitgestellt wird und
• das Panzerungselement aus einem Panzerstahl aus einer Stahllegierung besteht, welche folgende Legierungsbestandteile ausgedrückt in Gewichtsprozent (Gew.-%) aufweist:

| | |
|---|---|
| Kohlenstoff (C) | 0,2 bis 0,5 |
| Mangan (Mn) | 0,3 bis 2,5 |
| Nickel (Ni) sowie | 0,5 bis 3,0 |
| Silizium (Si) | 0,1 bis 3,0 |
| Phosphor (P) | kleiner als 0,05 |
| Schwefel (S) | kleiner als 0,02 |
| Aluminium (Al) | kleiner als 0,08 |
| Kupfer (Cu) | kleiner als 0,12 |
| Molybdän (Mb) | 0,1 bis 1,0 |
| Bor (B) | 0,001 bis 0,01 |
| Stickstoff (N) | kleiner als 0,05 |
| Chrom (Cr) | 0,1 bis 1,0 |
| Titan (Ti) | kleiner als 0,1 |
| Cobalt (Co) | kleiner als 2,0 |
| Niob (Nb) | kleiner als 0,8 |

Rest Eisen (Fe) und erschmelzungsbedingte Verunreinigungen,
und
• bei der strahltechnischen Behandlung eine Oberflächenrauheit Ra von 3 bis 10 Mikrometern erzeugt wird und
• eine Beschichtung mit einer Härte von 10 bis 230 Vickers (HV) aufgebracht wird.

Das Panzerungsbauteil kann in vielerlei Gestalt bereitgestellt werden. Hier können sowohl kaltgeformte als auch warmgeformte und pressgehärtete Bauteile zum Einsatz kommen.

Sind die Panzerungsbauteile dreidimensional geformt, so sind sie in Form und Geometrie auf ihre Verwendung im Fahrzeug angepasst.

Insbesondere können sie bevorzugt bedarfsgerecht an ihre Verwendung eine lokal variierende Dicke aufweisen. Die Dickenvariation kann durch spanabhebende Behandlung, walztechnische Behandlung oder stoffschlüssiges Verbinden zweier oder mehrerer Bleche unterschiedlicher Dicke bereitgestellt werden.

Die Dicke des Stahlblechs, aus dem das Panzerungselement besteht, beträgt zwischen 5,0 Millimeter und 10 Millimeter, insbesondere zwischen 7,0 Millimeter und 9,0 Millimeter, vorzugsweise zwischen 7,3 Millimeter und 8,4 Millimeter.

Die strahltechnische Behandlung wird in der Regel auf der Oberfläche durchgeführt, die der Fahrzeugaußenseite entgegengerichtet ist. Durch die strahltechnische Behandlung wird die Oberfläche gereinigt und aufgeraut. Es hat sich gezeigt, dass die nachfolgend aufgebrachte Beschichtung insbesondere bei Multihit-Beschuss, also Mehrfachbeschuss mit geringem Abstand der Auftreffpunkte, dazu führt, dass die Beschichtung erhalten bleibt und sich nicht von dem Panzerungselement löst und/oder abplatzt und somit die Beschussfestigkeit erhalten bleibt.

In einer bevorzugten Ausgestaltung des Verfahrens wird bei der strahltechnischen Behandlung ein Strahlmittel mit einer Härte von 60 bis 70 Rockwell (HRC), insbesondere 64 bis 68 Rockwell (HRC), verwendet. Ein Strahlmittel von hoher Härte ist notwendig, um die notwendige Rautiefe im Panzerstahl zu erreichen. Insbesondere wird ein Strahlmittel aus Stahlguss verwendet.

Weiterhin bevorzugt wird bei der strahltechnischen Behandlung ein Strahlmittel mit einem Durchmesser von 0,4 Millimeter bis 1,2 Millimeter verwendet. Bei einem Strahlmittel mit diesem Durchmesser entsteht eine feinverteilte Oberflächenwelligkeit auf der Oberfläche des Panzerungselements. Dadurch wird die Schichtanhaftung zusätzlich verbessert.

Des Weiteren wird vorzugsweise bei der strahltechnischen Behandlung das Strahlmittel in einem Winkel von 30° bis 70° relativ zur Oberfläche auf diese gestrahlt. Auch der Strahlwinkel hat Einfluss auf die Oberflächenbeschaffenheit. So wird etwa vorliegender Zunder effektiv entfernt ohne die Oberfläche zu schwer zu beschädigen.

Erfindungsgemäß wird bei der strahltechnischen Behandlung eine Oberflächenrauheit Ra von 3 bis 10 Mikrometern erzeugt. Es hat sich gezeigt, dass bei einer derartigen Rauheit das optimale Verhältnis zwischen Haftung der Beschichtung an der Oberfläche und der Beeinträchtigung der Oberfläche selbst gewährleistet ist. Bei kleineren Rautiefen haftet die Schicht deutlich schlechter, was zu großflächigen Abplatzungen der Schicht beim Multihit-Beschuss führt. Bei größeren Rautiefen kann es zu einem Verzug des Bauteils kommen, insbesondere wenn das Blech nur auf einer Seite gestrahlt wird.

Bevorzugt wird eine Beschichtung aus Aluminium oder einer Aluminiumlegierung oder Zink oder einer Zinklegierung aufgebracht.

Die Beschichtung wird vorzugsweise spritztechnisch aufgebracht wird, insbesondere durch thermisches Spritzen, bevorzugt durch Lichtbogen- oder Flammspritzen. Durch diese Verfahren ist es möglich eine präzise und variabel gestaltbare Schicht zu erzeugen.

Eine weitere vorteilhafte Ausgestaltung der Erfindung sieht vor, dass die Beschichtung in mehreren Lagen, bevorzugt in zwei oder drei Lagen, aufgebracht wird. Es hat sich gezeigt, dass eine Beschichtung aus mehreren Lagen sich vorteilhaft auf die Beschussbeständigkeit auswirkt.

In einer weiteren vorteilhaften Ausgestaltung der Erfindung ist vorgesehen, dass eine Beschichtung mit einer Dicke von 0,01 Millimeter bis 0,4 Millimeter, vorzugsweise 0,05 Millimeter bis 0,3 Millimeter, bevorzugt 0,1 Millimeter bis 0,25 Millimeter, ganz besonders bevorzugt 0,12 Millimeter bis 0,22 Millimeter, erzeugt wird.

Erfindungsgemäß wird ein Panzerungselement aus einem Panzerstahl aus einer Stahllegierung bereitgestellt, welche folgende Legierungsbestandteile ausgedrückt in Gewichtsprozent (Gew.-%) aufweist:

| | |
|---|---|
| Kohlenstoff (C) | 0,2 bis 0,5 |
| Mangan (Mn) | 0,3 bis 2,5 |
| Nickel (Ni) | 0,5 bis 3,0 |
| sowie | |
| Silizium (Si) | 0,1 bis 3,0 |
| Phosphor (P) | kleiner als 0,05 |
| Schwefel (S) | kleiner als 0,02 |
| Aluminium (Al) | kleiner als 0,08 |
| Kupfer (Cu) | kleiner als 0,12 |
| Molybdän (Mb) | 0,1 bis 1,0 |
| Bor (B) | 0,001 bis 0,01 |
| Stickstoff (N) | kleiner als 0,05 |
| Chrom (Cr) | 0,1 bis 1,0 |
| Titan (Ti) | kleiner als 0,1 |
| Cobalt (Co) | kleiner als 2,0 |
| Niob (Nb) | kleiner als 0,8 |

Rest Eisen (Fe) und erschmelzungsbedingte Verunreinigungen.

Eine derartige Stahllegierung eignet sich in besonderer Weise für erfindungsgemäße Bauteile, da sie bei hoher Festigkeit ein geringes Gewicht aufweist.

Vorteilhafterweise wird weiterhin ein Panzerungselement aus einem Stahlblech mit einer Härte 475 bis 665 Vickers (HV), vorzugsweise 520 bis 620 Vickers (HV), bereitgestellt.

Besonders vorteilhafte Beschussresistenz beziehungsweise eine erhöhte Mehrfachbeschussfähigkeit haben sich gezeigt, wenn eine Beschichtung mit einer Härte von 15 bis 115 Vickers (HV), vorzugsweise 20 bis 100 Vickers (HV), bereitgestellt wird.

## Patentansprüche

1. Verfahren zur Herstellung eines Panzerungsbauteils für Kraftfahrzeuge mit folgenden Schritten:
• Bereitstellen eines Panzerungselements aus einem Panzerstahl,
• Strahltechnische Behandlung zumindest eines Bereiches einer Oberfläche des Panzerungselements,
• Aufbringen einer Beschichtung auf die strahltechnisch behandelte Oberfläche des Panzerungselements, wobei die Beschichtung aus einem gegenüber dem Panzerstahl weicheren Werkstoff besteht, **dadurch gekennzeichnet, dass**
• das Panzerungselement aus einem Stahlblech mit einer Härte von 380 bis 760 Vickers (HV) bereitgestellt wird und
• das Panzerungselement aus einem Panzerstahl aus einer Stahllegierung besteht, welche folgende Legierungsbestandteile ausgedrückt in Gewichtsprozent (Gew.-%) aufweist:
| | |
|---|---|
| Kohlenstoff (C) | 0,2 bis 0,5 |
| Mangan (Mn) | 0,3 bis 2,5 |
| Nickel (Ni) | 0,5 bis 3,0 |
| sowie | |
| Silizium (Si) | 0,1 bis 3,0 |
| Phosphor (P) | kleiner als 0,05 |
| Schwefel (S) | kleiner als 0,02 |
| Aluminium (Al) | kleiner als 0,08 |
| Kupfer (Cu) | kleiner als 0,12 |
| Molybdän (Mb) | 0,1 bis 1,0 |
| Bor (B) | 0,001 bis 0,01 |
| Stickstoff (N) | kleiner als 0,05 |
| Chrom (Cr) | 0,1 bis 1,0 |
| Titan (Ti) | kleiner als 0,1 |
| Cobalt (Co) | kleiner als 2,0 |
| Niob (Nb) | kleiner als 0,8 |
Rest Eisen (Fe) und erschmelzungsbedingte Verunreinigungen,
und
• bei der strahltechnischen Behandlung eine Oberflächenrauheit Ra von 3 bis 10 Mikrometern erzeugt wird und
• eine Beschichtung mit einer Härte von 10 bis 230 Vickers (HV) aufgebracht wird.

2. Verfahren nach Anspruch 1, **dadurch gekennzeichnet, dass** bei der strahltechnischen Behandlung ein Strahlmittel mit einer Härte von 60 bis 70 Rockwell (HRC), insbesondere 64 bis 68 Rockwell (HRC), verwendet wird.

3. Verfahren nach Anspruch 1 oder 2, **dadurch gekennzeichnet, dass** bei der strahltechnischen Behandlung ein Strahlmittel mit einem Durchmesser von 0,4 Millimeter bis 1,2 Millimeter verwendet wird.

4. Verfahren nach einem der vorstehenden Ansprüche, **dadurch gekennzeichnet, dass** bei der strahltechnischen Behandlung das Strahlmittel in einem Winkel von 30° bis 70° relativ zur Oberfläche auf diese gestrahlt wird.

5. Verfahren nach einem der vorstehenden Ansprüche, **dadurch gekennzeichnet, dass** eine Beschichtung aus Aluminium oder einer Aluminiumlegierung oder Zink oder einer Zinklegierung aufgebracht wird.

6. Verfahren einem der vorstehenden Ansprüche, **dadurch gekennzeichnet, dass** die Beschichtung spritztechnisch aufgebracht wird, insbesondere durch thermisches Spritzen, bevorzugt durch Lichtbogen- oder Flammspritzen.

7. Verfahren nach einem der vorstehenden Ansprüche, **dadurch gekennzeichnet, dass** die Beschichtung in mehreren Lagen, bevorzugt in zwei oder drei Lagen, aufgebracht wird.

8. Verfahren nach einem der vorstehenden Ansprüche, **dadurch gekennzeichnet, dass** eine Beschichtung mit einer Dicke von 0,01 Millimeter bis 0,4 Millimeter, vorzugsweise 0,05 Millimeter bis 0,3 Millimeter, bevorzugt 0,1 Millimeter bis 0,25 Millimeter, ganz besonders bevorzugt 0,12 Millimeter bis 0,22 Millimeter, erzeugt wird.

9. Verfahren nach einem der vorstehenden Ansprüche, **dadurch gekennzeichnet, dass** ein Panzerungselement aus einem Stahlblech mit einer Härte und 475 bis 665 Vickers (HV), vorzugsweise 520 bis 620 Vickers (HV), bereitgestellt wird.

10. Verfahren nach einem der vorstehenden Ansprüche, **dadurch gekennzeichnet, dass** eine Beschichtung mit einer Härte von 15 bis 115 Vickers (HV), vorzugsweise 20 bis 100 Vickers (HV), aufgebracht wird.

## Claims

1. Method for producing an armouring component for motor vehicles, the method having the following steps:
- providing an armouring element made of an armoured steel,
- blasting treatment of at least one region of a surface of the armouring element,
- applying a coating to the surface of the armouring element treated by blasting, wherein the coating consists of a material softer than the armoured steel, **characterised in that**
- the armouring element is provided from a steel sheet with a hardness of 380 to 760 Vickers (HV), and
- the armouring element consists of an armoured steel which has the following alloy constituents expressed in percentage by weight (wt.%):
| | |
|---|---|
| carbon (C) | 0.2 to 0.5 |
| manganese (Mn) | 0.5 to 2.5 |
| nickel (Ni) | 0.5 to 3.0 |
| and | |
| silicon (Si) | 0.1 to 3.0 |
| phosphorus (P) | less than 0.05 |
| sulphur (S) | less than 0.02 |
| aluminium (Al) | less than 0.08 |
| copper (Cu) | less than 0.12 |
| molybdenum (Mb)0.1 | to 1.0 |
| boron (B) | 0.001 to 0.01 |
| nitrogen (N) | less than 0.05 |
| chromium (Cr) | 0.1 to 1.0 |
| titanium (Ti) | less than 0.1 |
| cobalt (Co) | less than 2.0 |
| niobium (Nb) | less than 0.8, |
the remainder being iron (Fe) and smelting-derived impurities, and **in that**
- a surface roughness Ra of 3 to 10 micrometres is produced in the blasting treatment and
- a coating with a hardness of 10 to 230 Vickers (HV) is applied.

2. Method according to claim 1, **characterised in that** the blasting treatment uses a blasting agent with a hardness of 60 to 70 Rockwell (HRC), in particular 64 to 68 Rockwell (HRC).

3. Method according to claim 1 or 2, **characterised in that** the blasting treatment uses a blasting agent with a diameter of 0.4 millimetres to 1.2 millimetres.

4. Method according to any of the preceding claims, **characterised in that**, in the blasting treatment, the blasting agent is blasted onto the surface at an angle ranging from 30° to 70° relative to the surface.

5. Method according to any of the preceding claims, **characterised in that** a coating made of aluminum or an aluminum alloy or zinc or a zinc alloy is applied.

6. Method according to any of the preceding claims, **characterised in that** the coating is applied by spraying, in particular by thermal spraying, preferably by arc or flame spraying.

7. Method according to any of the preceding claims, **characterised in that** the coating is applied in a plurality of layers, preferably in two or three layers.

8. Method according to any of the preceding claims, **characterised in that** a coating with a thickness of 0.01 millimetres to 0.4 millimetres, preferably 0.05 millimetres to 0.3 millimetres, preferably 0.1 millimetres to 0.25 millimetres, most preferably 0.12 millimetres to 0.22 millimetres, is produced.

9. Method according to any of the preceding claims, **characterised in that** an armouring element made of a steel sheet with a hardness of 475 to 665 Vickers (HV), preferably 520 to 620 Vickers (HV), is provided.

10. Method according to any of the preceding claims, **characterised in that** a coating with a hardness of 15 to 115 Vickers (HV), preferably 20 to 100 Vickers (HV), is applied.

## Revendications

1. Procédé de fabrication d'un composant de blindage pour véhicules automobiles, comprenant les étapes consistant à :
- fournir un élément de blindage en acier de blindage,
- traiter par grenaillage au moins une étendue d'une surface de l'élément de blindage,
- appliquer un revêtement sur la surface traitée par grenaillage de l'élément de blindage, dans lequel le revêtement est composé d'un matériau plus mou que l'acier de blindage, **caractérisé en ce que**
- l'élément de blindage est fourni à partir d'une tôle d'acier d'une dureté allant de 380 à 760 Vickers (HV) et
- l'élément de blindage est composé d'un acier de blindage en alliage d'acier présentant les composants d'alliage suivants, exprimés en pourcentage en poids (% en poids) :
Carbone (C) 0,2 à 0,5
Manganèse (Mn) 0,3 à 2,5
Nickel (Ni) 0,5 à 3,0
ainsi que
Silicium (Si) 0,1 à 3,0
Phosphore (P) inférieur à 0,05
Soufre (S) inférieur à 0,02
Aluminium (Al) inférieur à 0,08
Cuivre (Cu) inférieur à 0,12
Molybdène (Mb) 0,1 à 1,0
Bore (B) 0,001 à 0,01
Azote (N) inférieur à 0,05
Chrome (Cr) 0,1 à 1,0
Titane (Ti) inférieur à 0,1
Cobalt (Co) inférieur à 2,0
Niobium (Nb) inférieur à 0,8
le reste étant du fer (Fe) et des impuretés résultant de la fusion, et
- une rugosité de surface Ra de 3 à 10 micromètres est produite lors du traitement par grenaillage et
- un revêtement d'une dureté de 10 à 230 Vickers (HV) est appliqué.

2. Procédé selon la revendication 1, **caractérisé en ce que**, lors du traitement par grenaillage, un agent de grenaillage d'une dureté de 60 à 70 Rockwell (HRC), en particulier de 64 à 68 Rockwell (HRC), est utilisé.

3. Procédé selon la revendication 1 ou 2, **caractérisé en ce que**, lors du traitement par grenaillage, un agent de grenaillage d'un diamètre de 0,4 millimètre à 1,2 millimètres est utilisé.

4. Procédé selon l'une quelconque des revendications précédentes, **caractérisé en ce que**, lors du traitement par grenaillage, l'agent de grenaillage est projeté sur la surface selon un angle de 30° à 70° par rapport à celle-ci.

5. Procédé selon l'une quelconque des revendications précédentes, **caractérisé en ce qu'**un revêtement en aluminium ou en alliage d'aluminium ou en zinc ou en alliage de zinc est appliqué.

6. Procédé selon l'une quelconque des revendications précédentes, **caractérisé en ce que** le revêtement est appliqué par pulvérisation, en particulier par pulvérisation thermique, de préférence par pulvérisation à l'arc électrique ou à la flamme.

7. Procédé selon l'une quelconque des revendications précédentes, **caractérisé en ce que** le revêtement est appliqué en plusieurs couches, de préférence en deux ou trois couches.

8. Procédé selon l'une quelconque des revendications précédentes, **caractérisé en ce qu'**un revêtement d'une épaisseur de 0,01 millimètre à 0,4 millimètre, de préférence de 0,05 millimètre à 0,3 millimètre, préférentiellement de 0,1 millimètre à 0,25 millimètre, le plus préférentiellement de 0,12 millimètre à 0,22 millimètre, est produit.

9. Procédé selon l'une quelconque des revendications précédentes, **caractérisé en ce qu'**un élément de blindage est fourni à partir d'une tôle d'acier d'une dureté de 475 à 665 Vickers (HV), de préférence de 520 à 620 Vickers (HV).

10. Procédé selon l'une quelconque des revendications précédentes, **caractérisé en ce qu'**un revêtement d'une dureté de 15 à 115 Vickers (HV), de préférence de 20 à 100 Vickers (HV), est appliqué.
